# EUROPÄISCHE PATENTSCHRIFT

(11) **EP 3 296 533 B1**
(45) Veröffentlichungstag und Bekanntmachung des Hinweises auf die Patenterteilung: **10.04.2019**
(21) Anmeldenummer: 16189194.0
(22) Anmeldetag: 16.09.2016
(51) Int. Cl.: B08B 5/02, B08B 7/00, B08B 13/00, B01D 53/96, B01D 41/04, B01D 46/00, B01J 38/02, F01N 3/021, F01N 3/023, F01N 3/08, F01N 3/10

(54) **VERFAHREN ZUR QUALITÄTSVERBESSERUNG EINES AUS EINEM ABGASTRAKT EINER VERBRENNUNGSKRAFTMASCHINE AUSGEBAUTEN GASDURCHLÄSSIGEN GEGENSTANDES SOWIE VORRICHTUNG HIERZU**
METHOD FOR IMPROVING QUALITY OF A GAS-PERMEABLE OBJECT REMOVED FROM THE EXHAUST TRACT OF A COMBUSTION ENGINE AND DEVICE FOR SAME
PROCÉDÉ D'AMÉLIORATION DE LA QUALITÉ D'UN OBJET PERMÉABLE AU GAZ DÉVELOPPÉ À PARTIR DES GAZ D'ÉCHAPPEMENT D'UNE MACHINE À COMBUSTION INTERNE ET DISPOSITIF ASSOCIÉ

(43) Veröffentlichungstag der Anmeldung: 21.03.2018
(73) Patentinhaber: Hirtenberger Holding GmbH, 2552 Hirtenberg (AT)
(72) Erfinder: Mayer, Hanspeter, 8643 Allerheiligen (AT)
(74) Vertreter: Wirnsberger, Gernot

(56) Entgegenhaltungen:
- EP-A1- 2 446 952
- EP-A1- 2 884 065
- DE-A1- 3 321 455
- DE-A1-102004 055 597
- US-A1- 2010 307 339

## Beschreibung

Die Erfindung betrifft ein Verfahren zur Qualitätsverbesserung eines aus einem Abgastrakt einer Verbrennungskraftmaschine ausgebauten gasdurchlässigen Gegenstandes wie eines Filters oder Katalysators.

Weiter betrifft die Erfindung eine Vorrichtung zur Qualitätsverbesserung eines aus einem Abgastrakt einer Verbrennungskraftmaschine ausgebauten gasdurchlässigen Gegenstandes wie eines Filters oder eines Katalysators.

Aus dem Stand der Technik sind verschiedene Verfahren und Vorrichtungen zur Qualitätsverbesserung, insbesondere zur Reinigung, eines aus einem Abgastrakt einer Verbrennungskraftmaschine, insbesondere aus dem Abgastrakt eines Kraftfahrzeuges ausgebauten gasdurchlässigen Gegenstandes wie eines Filters oder eines Katalysators, insbesondere eines Dieselpartikelfilters, bekannt geworden. Ein Bedarf nach derartigen Verfahren und Vorrichtungen steigt aufgrund sinkender Grenzwerten für Abgase von Kraftfahrzeugen, insbesondere von dieselbetriebenen Kraftfahrzeugen, sowie hohen Kosten von Komponenten von Abgasreinigungsanlagen.

Verfahren und Vorrichtungen des Standes der Technik zur Qualitätsverbesserung, insbesondere zur Reinigung, derartiger Gegenstände haben den Nachteil, dass diese nur mit großem Aufwand umgesetzt werden können. Dabei ist zur Durchführung des Verfahrens häufig geschultes Fachpersonal erforderlich, wodurch erhebliche Kosten entstehen.

Hier setzt die Erfindung an. Aufgabe der Erfindung ist es, ein Verfahren der eingangs genannten Art anzugeben, welches auch mit ungeschultem Personal auf kostengünstige Weise umsetzbar ist.

Darüber hinaus soll eine Vorrichtung der eingangs genannten Art zur Durchführung eines solchen Verfahrens angegeben werden, welche einfach und kostengünstig herstellbar ist.

Die erste Aufgabe wird erfindungsgemäß durch ein Verfahren nach Anspruch 1 gelöst.

Im Rahmen der Erfindung wurde erkannt, dass das Verfahren auf besonders kostengünstige Weise durchführbar ist, wenn in einem vollautomatisierten Verfahren ein Zustand bzw. eine Qualität des Gegenstandes gemessen wird, wonach eine Qualitätsverbesserung, insbesondere eine Reinigung, durchgeführt wird, wonach eine erneute Zustandsmessung durchgeführt wird. Das Verfahren kann somit auch mit ungeschultem Personal prozesssicher umgesetzt werden, beispielsweise in Kfz-Werkstätten. So ist ein manueller Eingriff nur noch erforderlich, um Gegenstand mit beeinträchtigter Qualität, beispielsweise durch eine Ascheablagerungen verunreinigte Partikelfilter, an eine entsprechende Vorrichtung zur Durchführung des Verfahrens zu übergeben und den Gegenstand mit verbesserter Qualität bzw. den gereinigten Gegenstand anschließend wieder zu entnehmen.

Es kann allerdings auch eine Einrichtung zur automatisierten Beschickung der Vorrichtung vorgesehen sein, sodass mehrere Gegenstände hintereinander automatisiert gereinigt können bzw. eine Qualität mehrerer Gegenstände ohne manuellen Eingriff verbessert werden kann. Auf diese Weise können auch mehrere Anlagen verkettet betrieben werden, um eine große Anzahl von Gegenständen zu reinigen bzw. eine Qualität derselben zu verbessern.

Eine Qualität der Gegenstände kann insbesondere durch Reinigen verbessert werden. Alternativ kann im Rahmen der Qualitätsverbesserung auch vorgesehen sein, dass eine katalytische Reaktivität eines gealterten Filters aktiviert bzw. verbessert wird. Dadurch wird eine Qualität des Gegenstands ohne Reinigen verbessert. Bei einem Gegenstand wie einem Filter kann eine Qualität beispielsweise über ein Partikelrückhaltevermögen, eine katalytische Reaktivität, eine Umsetzungsrate, einen Reinigungsgrad oder eine Kombination aus solchen messbaren Parametern definiert werden.

Eine Änderung eines Zustandes des Gegenstandes bei einer Reinigung bzw. bei einer Qualitätsverbesserung kann ebenfalls durch Messung eines Zustandes vor und nach der Reinigung bzw. Qualitätsverbesserung erhoben und für eine Steuerung des Verfahrens genutzt werden. Beispielsweise kann eine mittels einer Reinigung nicht erreichbare Verbesserung einer Qualität bzw. eines Reinigungszustandes des Gegenstandes für eine automatische Klassifikation des Gegenstandes als unbrauchbar bzw. nicht wiederaufbereitbar genutzt werden.

Günstig ist es, wenn basierend auf einem Ergebnis der Zustandsmessung automatisiert eine Reinigungsstrategie ausgewählt und anschließend eine Reinigung gemäß der Reinigungsstrategie zur Qualitätsverbesserung durchgeführt wird. Es kann damit gewährleistet werden, dass der Gegenstand besonders effektiv gereinigt bzw. wiederaufbereitet wird, weil eine auf einen jeweiligen Zustand, beispielsweise eine festgestellte Verschmutzung, abgestimmte Reinigung durchgeführt werden kann.

Es ist von Vorteil, wenn eine Qualitätsverbesserung, insbesondere eine Reinigung, durchgeführt wird, bis ein Abbruchkriterium wie ein gewünschter Qualitäts- oder Reinigungszustand oder ein Unterschreiten eines Reinigungsfortschrittes erreicht ist. Durch Definieren eines entsprechenden Abbruchkriteriums kann somit sichergestellt werden, dass einerseits eine Reinigung nicht mehr erfolgt, wenn ein gewünschter Reinigungszustand erreicht oder trotz andauernder Reinigung kein Reinigungsfortschritt mehr erfassbar ist. Ein Reinigungsfortschritt wird durch Vergleich von Ergebnissen von Zustandsmessungen bestimmt, welche vor und nach einer Reinigung durchgeführt werden.

Eine Messung eines Zustandes bzw. eine Zustands- oder Qualitätsmessung kann beispielsweise automatisiert durch eine optische Messung mittels einer Kamera und automatisierter Auswertung eines Kamerabildes, einer Differenzdruckprüfung oder Messung einer katalytischen Reaktivität oder Messung eines Partikelfangvermögens erfolgen. In Bezug auf Verfahren zur Messung eines Zustandes bzw. einer Qualität eines Gegenstandes wie eines Filters oder eines Katalysators wird auf die Dokumente EP 2 884 065 A1, EP 2 884 066 A1, EP 2 884 067 A1 sowie WO 2015/086597 A2 verwiesen. Um Verunreinigungen oder Beschädigungen punktgenau lokalisieren zu können, kann der Gegenstand auch mittels Röntgenstrahlen oder dergleichen analysiert werden.

Grundsätzlich kann die Reinigung oder eine Funktions- bzw. Qualitätsverbesserung wie eine Aktivierung oder Verbesserung einer katalytischen Reaktivität auf verschiedenste Weise erfolgen. Es hat sich als besonders günstig erwiesen, wenn die Reinigung mit einem unter einem Überdruck stehendem Medium und/oder einem heißen Medium, insbesondere einem heißen Fluid, insbesondere einem heißen Gas, durchgeführt wird. Ferner kann die Reinigung mit einem Medium mit hoher Geschwindigkeit erfolgen, beispielsweise mit Luft bei Überschallgeschwindigkeit.

Um einen besonders hohen Automatisierungsgrad bei gleichzeitig einfacher Umsetzbarkeit des Verfahrens zu erreichen, ist es günstig, wenn der Gegenstand während des Verfahrens mit einem Werkstückträger transportiert wird, welcher gasdurchlässig ist. Ein zu reinigender Gegenstand wie ein Partikelfilter eines Kraftfahrzeuges weist üblicherweise eine Wabenstruktur oder dergleichen mit zwei gegenüberliegenden Stirnseiten für einen Ein- bzw. Austritt von Abgas auf. Durch Einsatz eines gasdurchlässigen Werkstückträgers ist gewährleistet, dass ein an einer Stirnseite zur Reinigung oder für eine Qualitätsbeurteilung aufgebrachtes Gas den Gegenstand passieren und an der gegenüberliegenden Stirnseite durch den Gegenstand und den Werkstückträger wieder austreten kann. Ferner kann der Gegenstand bei Einsatz eines gasdurchlässigen Werkstückträgers auch durch den Werkstückträger mit einem Reinigungsmedium wie einem heißen Gas, einem Gas mit hoher Geschwindigkeit oder Druckluft beaufschlagt werden, um den Gegenstand gleichzeitig oder abwechselnd von zwei Seiten zu reinigen oder eine Qualität des Gegenstandes zu prüfen und/oder zu verbessern.

Zur gleichmäßigen Aufbringung eines Reinigungsmediums auf eine Seite, an welcher der Gegenstand mit dem Werkstückträger verbunden ist, hat es sich bewährt, dass der Werkstückträger einen Diffusor aufweist. Der Diffusor kann auch durch einen Diffusoreinsatz gebildet werden. Üblicherweise ist der Gegenstand stehend auf dem Werkstückträger angeordnet und kann somit über den Diffusor auch die am Werkstückträger positionierte Stirnfläche des Gegenstandes von unten mit einem Reinigungsmedium beaufschlagt bzw. mit einem heißen Gas gleichmäßig gereinigt oder qualitätsgeprüft werden. Hierzu ist es besonders günstig, wenn ein Querschnitt des Diffusors an einem dem Gegenstand zugewandten Ende einem Querschnitt des Gegenstandes an der entsprechenden Stirnseite entspricht. Um eine einfache Anpassbarkeit des Werkstückträgers an verschiedenste Gegenstände zu erreichen, kann der Diffusor auch durch einen austauschbaren Diffusoreinsatz gebildet werden, welcher mit dem Werkstückträger verbunden ist. Der Diffusoreinsatz bildet somit einen Adapter zur Verbindung unterschiedlicher Gegenstände mit dem Werkstückträger. Ferner können mit dem Werkstückträger alternativ oder ergänzend zum Diffusoreinsatz auch wechselbare Messdüsen, Lasersensoren, Kameras und dergleichen für eine Reinigung und/oder Qualitätsbeurteilung lösbar verbunden werden.

Bevorzugt wird der Gegenstand mit einem heißen Gas gereinigt, welches durch einen Diffusor aufgebracht wird, üblicherweise in einer Heißgaszelle. Es hat sich dabei als günstig erwiesen, dass ein axial und/oder radial verstellbarer Diffusor eingesetzt wird, welcher vor Aufbringung des heißen Gases an einer Geometrie des Gegenstandes angepasst wird. Der Diffusor kann auch schräg verstellbar ausgebildet sein. Eine Anpassung erfolgt in der Regel automatisiert, nachdem eine Geometrie des Gegenstandes erfasst wurde. Eine Erfassung einer Geometrie des Gegenstandes erfolgt üblicherweise ebenfalls in einem automatisierten Messverfahren, beispielsweise bei einer Einfahrt des Gegenstandes in eine Vorrichtung zur Durchführung des Verfahrens. Dabei werden vorzugsweise auch allenfalls vorhandene Störkonturen des Gegenstandes automatisiert erkannt. Dies können Störkonturen in axialer sowie radialer Richtung wie Bügel, Flansche, Sensoren, Rohrstücke und dergleichen sein. Dadurch ist das Verfahren einerseits einfach an unterschiedliche Gegenstände mit verschiedenen Durchmessern anpassbar und ist andererseits eine effektive Regeneration durch eine gleichmäßige Beaufschlagung des Gegenstandes mit einem heißen Gas bei geringem Energieverbrauch gewährleistet. Dabei wird durch Überwachung der Regeneration eine unkontrollierbare exotherme Reaktion vermieden, welche zu einer Rauchentwicklung oder einem Brand führen könnte.

Eine besonders effiziente Reinigung des Gegenstandes ist auf einfache Weise möglich, wenn ein heißes Gas aus unterschiedlichen Richtungen auf zwei gegenüberliegende Stirnflächen des Gegenstandes aufgebracht wird. Das heiße Gas kann dabei gleichzeitig oder abwechselnd auf eine Oberseite und eine Unterseite des Gegenstandes aufgebracht werden. Bei abwechselnder Aufbringung eines heißen Gases kann bei unveränderter Heizleistung eine bessere Durchdringung bzw. ein größeres aufgeheiztes Filtervolumen erreicht werden als bei Beaufschlagung von nur einer Seite. Dadurch kann der Gegenstand bei reduziertem Energiebedarf vollständig aufgeheizt bzw. thermisch gereinigt und/oder eine Qualität des Gegenstandes verbessert werden. Somit ist das Verfahren auch besonders gut zur Durchführung in Kfz-Werkstätten und dergleichen geeignet, in welchen nur eine geringe Leistung zur Durchführung des Verfahrens zur Verfügung steht. Durch eine thermische Reinigung werden dabei insbesondere Harnstoff-Kristalle bei SCR-Katalysatoren entfernt, Schwefel- und Phosphorvergiftungen katalytischer Zentren entsprechender Filter rückgängig gemacht und Ölrückstände verbrannt, sodass eine Funktion des Gegenstandes verbessert wird.

Üblicherweise ist ein Diffusor mit variabler Geometrie zur Anpassung an Gegenstände mit unterschiedlicher Größe bzw. unterschiedlichen Durchmessern ortsfest kopfseitig in einer Vorrichtung zur Durchführung des Verfahrens angeordnet, über welchen Diffusor ein heißes Gas von oben auf den Gegenstand zur Reinigung aufbringbar ist. Über eine Austauschbarkeit eines in einem Werkstückträger bodenseitig angeordneten Diffusoreinsatzes und eine variable Geometrie des kopfseitigen ortsfesten Diffusors ist somit eine Aufbringung eines heißen Gases sowohl von oben als auch von unten auf den Gegenstand gewährleistet, wobei gleichzeitig eine Anpassbarkeit an Gegenstände unterschiedliche Durchmesser gegeben ist.

Es hat sich bewährt, dass eine Reinigung mit einem unter einem Druck stehenden Fluid, insbesondere einem Gas, vorzugsweise Luft, erfolgt, üblicherweise bei einem Druck von 1 bar bis 50 bar, vorzugweise weniger als 10 bar. Das Gas wird dabei bei Schall- als auch bei Überschallgeschwindigkeit aufgebracht, wobei ein Druck bzw. eine Druckenergie vollständig in Geschwindigkeit des Gases bzw. eine Geschwindigkeitsenergie umgewandelt sein kann. Als unter einem Druck stehendes Gas wird somit auch ein Gas mit einer Geschwindigkeit verstanden bzw. ein Gas mit geringem statischen und hohem dynamischen Druck. Eine derartige Reinigung wird auch als mechanische Reinigung bezeichnet und in der Regel vor Reinigung des Gegenstandes mit einem heißen Gas durchgeführt, wobei dies abhängig von einer gewählten Reinigungsstrategie ist. Als Reinigungsstrategie wird hierbei eine Abfolge einzelner Reinigungsschritte wie einer mechanischen Reinigung oder einer thermischen Reinigung sowie die Wahl einzelner Parameter der durchgeführten Reinigung wie eine Temperatur eines aufgebrachten Mediums oder ein Druck einer Druckluft bei einer mechanischen Reinigung bezeichnet. Eine automatisierte Auswahl einer Reinigungsstrategie erfolgt in der Regel basierend auf einem erfassten Reinigungszustand und/oder einem erfassten strukturellen Zustand des Gegenstandes.

Erfindungsgemäß wird das unter einem Druck stehende Gas mit einer Geschwindigkeit von 1,0-Facher bis 3-Facher Schallgeschwindigkeit aufgebracht. Üblicherweise wird der Gegenstand mit Luft gereinigt, welche mit einer Geschwindigkeit von 300 m/s bis 1000 m/s, insbesondere etwa 1,9-Facher Schallgeschwindigkeit, aufgebracht wird.

Erfindungsgemäß wird das Gas durch eine Düse aufgebracht, wobei ein Strahlwinkel 1° bis 45°, vorzugsweise 10° bis 15°beträgt. Dadurch ist eine Geschwindigkeit der Luft auch bei einem Auftreffen derselben auf den Gegenstand noch so hoch, dass eine besonders gute Reinigungswirkung und Qualitätsverbesserung erreicht wird. Darüber hinaus ergibt sich bei einem entsprechenden Strahlwinkel ein hoher Druckgradient senkrecht zu einer Strömungsrichtung, welcher ebenfalls günstig für eine Reinigung von Partikelfiltern ist. Alternativ oder ergänzend kann das Gas auch durch eine Gasleitung mit einer entsprechenden Düse und einem Diffusorende aufgebracht werden. Grundsätzlich kann ein Gas zur Reinigung beispielsweise durch eine einzige Düse aufgebracht werden. Vorteilhaft ist es, wenn zur Reinigung ein Gas durch mehrere, insbesondere zwei bis fünf, Düsen gleichzeitig oder abwechselnd auf eine Stirnseite des Gegenstandes aufgebracht wird. Dadurch ist eine besonders rasche und gleichzeitig effiziente Reinigung mit Druckluft möglich. Alternativ kann die Reinigung auch mittels einer Gasleitung mit einem Diffusorende mit einem konstanten oder pulsierenden Gasstrom erfolgen.

Eine besonders effektive Reinigung ist mit geringem Energieaufwand möglich, wenn das Gas mit zeitlich variablem Druck bzw. gepulst aufgebracht wird, vorzugsweise mit einer Frequenz von 0,1 Hz bis 100 Hz, insbesondere 1 Hz bis 10 Hz. Dadurch kann eine sehr effektive Reinigung erfolgen. Alternativ zu einem Gas wie Wasserdampf, Luft oder dergleichen kann grundsätzlich auch ein anderes Fluid, beispielsweise eine Reinigungsflüssigkeit, mit pulsierend wechselndem bzw. zeitlich variablem Druck aufgebracht werden, um den Gegenstand zu reinigen. Eine Pulsfrequenz kann grundsätzlich sowohl in einem Ultraschall- als auch in einem Infraschallbereich liegen.

Es hat sich als günstig erwiesen, dass mehrere, insbesondere zwei bis fünf, Düsen eingesetzt werden und Druckpulse durch die einzelnen Düsen zeitlich versetzt aufgebracht werden. Somit kann durch ein zeitlich versetztes Ansteuern einzelner Düsen, welche vorzugsweise auf denselben Bereich des Gegenstandes gerichtet und üblicherweise etwa parallel orientiert sind, eine entsprechend höhere Pulsfrequenz am Gegenstand erreicht werden. Dadurch kann eine sehr effektive Reinigung gewährleistet werden. Gleichzeitig ist somit die Reinigung auch durch mehrere Düsen mit einer geringen Kompressorleistung zur Bereitstellung von Druckluft möglich, sodass das Verfahren beispielsweise auch in Kfz-Werkstätten einfach umgesetzt werden kann, welche nur über eine limitierte Energieversorgung verfügen. Es hat sich gezeigt, dass bei einem Verfahren, wobei einzelne Düsen abwechselnd pulsierend angesteuert werden, eine bessere Reinigungswirkung erzielt werden kann als bei kontinuierlicher Anströmung aus einer Düse bei gleicher Kompressorleistung. Alternativ zu einem Kompressor kann ein mit einer gewünschten Geschwindigkeit bewegtes Gas natürlich auch mittels eines Gebläses oder einer Verbrennungsreaktion bzw. mit einem Gasgenerator bereitgestellt werden.

Darüber hinaus kann bei Anströmung aus mehreren Düsen, wobei die einzelnen Düsen mit unterschiedlichen Pulsfrequenzen angesteuert bzw. geöffnet und geschlossen werden, aufgrund von Schwebungseffekten und Druckwellen-Interferenzen neben einer besonders effektiven Reinigung auch eine sehr gute Austragung von Verunreinigungen aus Zellwänden eines Filters erreicht werden. So sind bei Überlagerung von Druckpulsen, welche sich bei einer Ansteuerfrequenz der Düsen von 1 Hz bis 10 Hz ergeben, über Druckreflexionen hochfrequente Dichtepulse mit Frequenzen von ca. 10 Hz bis 1000 Hz erreichbar.

Mit Vorteil werden zwei Düsen parallel auf einen zu reinigenden Gegenstand ausgerichtet und abwechselnd gepulst angesteuert, sodass beispielsweise aus einer ersten Düse 10 Druckluftpulse mit Überschallgeschwindigkeit auf den Gegenstand aufgebracht werden, wonach mit der zweiten Düse 10 Pulse mit Überschallgeschwindigkeit auf den Gegenstand aufgebracht werden. Es hat sich gezeigt, dass dabei auftretende starke Geschwindigkeits- und Druckunterschiede zwischen Stromlinien der beiden Düsen infolge von Scherwirkung und Geschwindigkeitsunterschieden zweier paralleler Gasströmungen zu einer Erhöhung einer Reinigungswirkung sowie zu einem räumlichen Pulsationfeld bzw. räumlichen Druckwellen führen. So ist ein statischer Druck maximal, wenn eine Luftgeschwindigkeit minimal bzw. eine Düse gerade geschlossen ist und umgekehrt.

Es hat sich als günstig erwiesen, dass eine Pulsfrequenz abhängig von einer Geometrie des Gegenstandes derart gewählt wird, dass das mit wechselndem Druck aufgebrachte Gas im Gegenstand eine Druckwelle bildet, welche an einem Ende des Gegenstandes reflektiert wird. Dadurch ergeben sich im Inneren des Gegenstandes eine oder mehrere Überlagerungen aus vorlaufenden und rücklaufenden Wellen, welche lokal Druckerhöhungen und Druckminderungen zur Folge haben. Ferner bewirkt dies auch Druckerhöhungen und Druckpulsationen in einer Richtung senkrecht zu einer Laufrichtung der Wellen bzw. einer Strömungsrichtung bewirken. Dadurch kann mit einer geringen eingebrachten Energiemenge eine sehr effektive Reinigung gewährleistet werden. Üblicherweise wird dabei ein Druck des aufgebrachten Gases, in der Regel Luft, während der Druckpulse derart gewählt, dass die Luft gepulst bzw. stoßweise mit Überschallgeschwindigkeit auf den Gegenstand auftrifft. Die Druckpulse können somit durch gepulstes Öffnen eines Ventils erreicht werden, welches die Düse mit einer entsprechenden Überdruckquelle wie einer Druckleitung verbindet.

Eine besonders wirkungsvolle Reinigung wird erreicht, wenn die Pulsfrequenz derart gewählt wird, dass sich die reflektierte Druckwelle im Gegenstand mit einer vorlaufenden Druckwelle an einer vordefinierten Position überlagert, um an der vordefinierten Position eine verbesserte Reinigungswirkung und/oder Qualitätsverbesserung zu erreichen. Bei einer entsprechenden Überlagerung entsteht in der Regel aus einer axialen Gasbewegung in einer Filterzelle eine Querströmung, welche auch benachbarte Zellwände durchdringen kann. Es kann somit automatisiert eine sehr effiziente und gleichzeitig effektive Reinigung sowie Qualitätsverbesserung erfolgen, wenn im Rahmen der Zustandsmessung, welche in einem ersten Schritt durchgeführt wird, nicht nur ein Grad einer Verunreinigung des Gegenstandes, sondern auch eine Position der Verunreinigungen im Gegenstand bestimmt wird und daraus Parameter für eine nachfolgende Reinigung mit pulsierender Druckluft abgeleitet werden. Beispielsweise kann mit optischen und/oder strahlungsbasierten Messverfahren eine genaue Position von Ascheablagerungen im Partikelfilter erfasst und darauf abgestimmt Parameter einer Druckluftreinigung ermittelt werden, sodass Druck bzw. Geschwindigkeit der austretenden Luft und Pulsfrequenz für ein gezieltes Abreinigen der Verunreinigung im Partikelfilter eingestellt werden können. Dies kann auch vollautomatisiert erfolgen, zumal sich eine für eine Überlagerung an einer vordefinierten Position erforderliche Pulsfrequenz sowie eine Geschwindigkeit der austretenden Luft bei Anwendung bekannter gasdynamischer Methoden unmittelbar aus der durch die Verunreinigung vordefinierten Position und der Geometrie des Gegenstandes ergeben. Darüber hinaus kann bei automatisierter Erfassung von Position und Art von Verunreinigungen und Störstellen im Gegenstand auch automatisiert beurteilt werden, ob eine Verunreinigung bzw. Störstelle durch Reinigung noch entfernbar bzw. regenerierbar ist. Wird dabei festgestellt, dass eine Reinigung nicht zweckmäßig ist, kann der Gegenstand auch sogleich einer Entsorgung zugeführt werden, ohne eine Reinigung durchzuführen.

Insbesondere für eine Reinigung mittels gezielter Überlagerung von vor- und rücklaufenden Druckwellen im Gegenstand ist es günstig, wenn eine Geometrie des Gegenstandes automatisiert erfasst wird, insbesondere mit einem optischen Sensor wie einer Kamera oder einem Laser-Scanner. Eine Einrichtung zur Erfassung einer Geometrie des Gegenstandes kann an einer mit einem kartesischen Roboter bewegbaren Reinigungsdüse angeordnet sein. Alternativ zu einem kartesischen Roboter kann natürlich jede Einrichtung eingesetzt werden, mit welcher eine Einrichtung in der Vorrichtung vorzugsweise mehrachsig bewegbar ist, beispielsweise ein Polarkoordinaten-Roboter. Darüber hinaus kann eine derartige Einrichtung auch fix in einer entsprechenden Vorrichtung positioniert sein, wobei der Gegenstand derart an der Einrichtung vorbeibewegt wird, dass eine Geometrie des Gegenstandes erfassbar ist. Beispielsweise kann auf diese Weise ein Laser-Scanner oder eine andere Einrichtung zur Geometrieerfassung wie ein Kontaktstab oder eine 3D-Kamera zwischen einem Übergabebereich und einer Kaltzelle angeordnet sein, sodass bei einer Fahrt des Gegenstandes vom Übergabebereich in die Kaltzelle eine Geometrie automatisiert erfassbar ist. Alternativ oder ergänzend kann auch ein Gewicht des Gegenstandes vor, während und/oder nach einer Reinigung gemessen werden. Über eine Geometrie und/oder ein Gewicht des Gegenstandes kann auf eine Bauart und Bauform des Gegenstandes sowie einer zu reinigenden Bauteilgröße geschlossen werden.

Dabei können einerseits Beschädigungen des Gegenstandes wie Risse oder dergleichen erfasst werden, sodass beispielsweise automatisiert bestimmbar ist, dass ein entsprechend stark beschädigter Gegenstand nicht mehr gereinigt, sondern ausgeschieden werden muss. Ferner kann durch automatisierte Bestimmung der Geometrie des Gegenstandes auch errechnet werden, welche Parameter einer Druckluftreinigung erforderlich sind, um ein gewünschtes Überlagern einer vorlaufenden Druckwelle mit einer an einem offenen Ende des Gegenstandes reflektierten rücklaufenden Druckwelle zu erreichen.

Weiter hat es sich als vorteilhaft erwiesen, wenn eine Abwärme des Verfahrens zumindest teilweise über einen Wärmetauscher wiedergewonnen und in das Verfahren rückgeführt wird. Dadurch wird ein Energiebedarf für das Verfahren reduziert, sodass sich dieses auch dezentral beispielsweise in Kfz-Werkstätten kosteneffizient umsetzen lässt. Beispielsweise kann die Abwärme über einen Luftvorwärmer zur Erwärmung einer Temperatur einer Zuluft für die Heißgasreinigung oder in der Kaltzelle zur Erhöhung einer Umgebungstemperatur eingesetzt werden, um eine Bildung von Kondenswasser bei einer Expansion von Druckluft zu vermeiden.

Erfindungsgemäß wird die Aufgabe durch eine Vorrichtung nach Anspruch 10 gelöst.

Es wird somit eine kombinierte Diagnose- und Qualitätsverbesserungsvorrichtung erreicht, mit welcher eine Qualität von Gegenständen wie Partikelfiltern, insbesondere Dieselpartikelfiltern, kosteneffizient und automatisiert verbessert werden kann, insbesondere durch eine Reinigung. Über die Datenverarbeitungsanlage bzw. einer in diese implementierte Logik wie einer Fuzzylogik kann eine Qualitätsverbesserung, insbesondere eine Reinigung, basierend auf einem gemessenen Zustand vollautomatisiert erfolgen und können Entscheidungen betreffend ein Qualitätsverbesserungs- und/oder Reinigungsverfahren automatisiert basierend auf gemessenen Daten abgeleitet werden, sodass beispielsweise die automatisierte Reinigung abgestimmt auf einen tatsächlichen Reinigungsbedarf durchgeführt werden kann. Dies ermöglicht ein besonders effizientes Verfahren.

Eine Einrichtung zur Verbesserung einer Qualität des Gegenstandes kann als Reinigungseinrichtung ausgebildet sein. Ferner kann die Einrichtung zur Verbesserung einer Qualität beispielsweise zur Aufbringung einer Beschichtung oder eines Fluides eingerichtet sein, um eine katalytische Reaktivität des Gegenstandes zu verbessern oder zu aktivieren. Es bildet somit eine Reinigungseinrichtung jedenfalls eine Einrichtung zur Verbesserung einer Qualität des Gegenstandes, jedoch muss ist eine Einrichtung zur Verbesserung einer Qualität nicht unbedingt als Reinigungseinrichtung ausgebildet sein. Natürlich können auch mehrere Einrichtungen zur Qualitätsverbesserung vorgesehen sein, wobei eine oder mehrere Einrichtungen zur Qualitätsverbesserung als Reinigungseinrichtungen ausgebildet sein können, beispielsweise zur mechanischen Reinigung mittels Druckluft oder zur thermischen Reinigung mittels eines heißen Gases.

Üblicherweise ist mit der Vorrichtung ein Verfahren zur Qualitätsverbesserung, insbesondere zur Reinigung, gemäß einem geschlossenen Regelkreis durchführbar, wobei eine Qualität, insbesondere ein Reinigungszustand, im Rahmen einer Zustandsmessung gemessen und basierend auf gemessenen Daten eine Qualitätsverbesserung, insbesondere eine Reinigung, durchgeführt wird, wonach der Zustand erneut gemessen wird. Mit einer erfindungsgemäßen Vorrichtung ist somit aufgrund einer Automatisierung von Zustandsmessung und Reinigung bzw. Qualitätsverbesserung ein Verfahren mit einem Prozessfähigkeitsindex von mehr als 1,66 erreichbar. Günstig ist es, wenn die Vorrichtung eine Kaltzelle zur Reinigung des Gegenstandes mit einem unter einem Überdruck stehenden Medium und eine Heißreinigungszelle zur Reinigung des Gegenstandes mit einem heißen Gas aufweist. Somit ist mit der Vorrichtung ein Filter sowohl mechanisch, beispielsweise mit Druckluft in der Kaltzelle, und thermisch, beispielsweise mit heißer Luft, in der Heißreinigungszelle reinigbar. Darüber hinaus können durch den Einsatz zweier Zellen grundsätzlich auch zwei Gegenstände gleichzeitig gereinigt werden. Natürlich können auch mehrere Kaltzellen und Heißreinigungszellen vorgesehen sein.

Die Heißreinigungszelle kann zur Durchführung einer thermischen Reinigung des Gegenstandes und/oder zur Trocknung des Gegenstandes, zur Reaktivierung von katalytischen Zentren des Gegenstandes oder dergleichen eingerichtet sein, um eine Qualität des Gegenstandes zu verbessern. Alternativ oder ergänzend kann auch die Kaltzelle allgemein als Einrichtung zur Qualitätsverbesserung ausgebildet sein.

Es hat sich bewährt, dass die Vorrichtung ein Transportsystem für einen Transport der zu reinigenden Gegenstände mit Werkstückträgern aufweist, wobei die Werkstückträger gasdurchlässig sind. Üblicherweise ist der Werkstückträger allgemein für ein Fluid wie eine Flüssigkeit oder ein Gas durchlässig. Es kann somit ein Partikelfilter beispielsweise stehend auf den Werkstückträgern transportiert und gleichzeitig sowohl von einer Oberseite als auch von einer Unterseite aus gereinigt werden, beispielsweise mit Druckluft oder mit einem heißen Gas.

Vorteilhaft ist es, wenn der Werkstückträger einen Diffusor mit einer Zuleitung aufweist, um einen auf dem Werkstückträger positionierten Gegenstand von unten über die Zuleitung vollflächig mit einem Gas zu beaufschlagen. Dadurch können Gegenstände unterschiedlichster Größe von beiden Seiten beispielsweise thermisch gereinigt sowie von einem Prozessgas durchströmt und umströmt werden. Durch eine derartige thermische Reinigung von beiden Stirnseiten eines Partikelfilters aus ist eine vollständige Aufheizung des Filters auch mit reduziertem Energieeinsatz verglichen mit einer Beaufschlagung von nur einer Seite aus möglich. Üblicherweise erfolgt eine Beaufschlagung mit einem heißen Gas abwechselnd von oben und unten. Dadurch kann auch mit geringer Leistungsaufnahme bzw. einer geringen Anschlussleistung der Vorrichtung eine thermische Reinigung von zwei Seiten erfolgen. Das Gas kann dabei Luft sein oder Zusätze anderer Gaskomponenten enthalten, um beispielsweise eine Reinigungswirkung zu aktivieren oder den Gegenstand gleichzeitig zu prüfen und zu reinigen. Das Gas kann auch als Katalysator wirken und Reaktionen beschleunigen, ohne sich umzuwandeln.

Um die Vorrichtung auf besonders einfache Weise an Gegenstände unterschiedlichster Größe anzupassen, ist es günstig, wenn der Diffusor bzw. ein Diffusoreinsatz lösbar mit dem Werkstückträger verbunden ist. Es können dann durch einen einfachen Tausch des Diffusoreinsatzes Filter sowohl mit großem als auch mit kleinem Durchmesser gereinigt werden, wobei der Diffusor jeweils exakt an eine Filtergeometrie angepasst werden kann. Üblicherweise weist der Werkstückträger hierzu eine Aufnahme für verschiedene Diffusoreinsätze unterschiedlicher Geometrien auf, welche somit modular mit den Werkstückträgern verbindbar sind. Alternativ kann der Diffusor im Werkstückträger auch mit variabler Geometrie ausgebildet sein.

Mit Vorteil ist in der Heißreinigungszelle ein radial und/oder axial verstellbarer variabler Diffusor positioniert, um ein vollflächiges und gleichmäßiges Aufbringen eines heißen Gases auf Gegenstände unterschiedlicher Durchmesser zu ermöglichen. Ein solcher variabler Diffusor mit variabler Geometrie kann beispielsweise konstruktiv durch auf einem Kreis oder einem Polygon angeordnete flächige Elemente, beispielsweise Bleche, umgesetzt werden, wobei die flächigen Elemente ineinander verschiebbar sind, sodass sich eine Bauweise ähnlich einer Nachbrennerdüse von Überschall-Flugzeugen ergibt. Ergänzend oder alternativ zu einem variablen Diffusor kann auch ein schräg verstellbarer, ein axial zustell- oder verstellbarer Adapter mit variabler Geometrie zur Anpassung an unterschiedliche Gegenstände vorgesehen sein.

Um eine thermische Reinigung mit reduziertem Energieeinsatz zu ermöglichen, ist es von Vorteil, wenn die Vorrichtung zur gleichzeitigen Aufbringung eines heißen Gases auf zwei Stirnseiten des Gegenstandes eingerichtet ist. Hierzu können in der Heißgaszelle eine Einrichtung zur Aufbringung eines heißen Gases von oben sowie gleichzeitig eine Einrichtung zur Aufbringung eines heißen Gases von unten vorgesehen sein. Üblicherweise ist die Einrichtung zur Aufbringung des heißen Gases von oben als variabler Diffusor bzw. als Diffusor mit variabler Geometrie ausgebildet. Darüber hinaus kann in der Heißgaszelle auch eine Einrichtung zur Messung einer Temperatur des Gegenstandes vorgesehen sein, um den Gegenstand bei Bedarf zu kühlen. Somit kann ein übermäßiges und den Gegenstand beschädigendes Erhitzen bei einer Regeneration von Ruß zuverlässig verhindert werden. Die Vorrichtung ist üblicherweise auch zur Unterbindung einer Gaszufuhr und einer Gasabfuhr eingerichtet, um bei einer ungewollten thermischen Reaktion eine Überhitzung vermeiden zu können, indem eine Sauerstoffzufuhr unterbunden wird. Alternativ oder ergänzend kann auch vorgesehen sein, dass bei einer Überhitzung ein Löschgas oder ein Inertgas automatisiert eingebracht wird. Darüber hinaus kann auch für den Fall einer Überhitzung eine automatische Notabschaltung und Kühlung der Vorrichtung vorgesehen sein.

Es hat sich bewährt, dass in der Kaltzelle eine mechanische Reinigungseinrichtung zur Reinigung des Gegenstandes mit einem Gas unter einem pulsierend wechselnden Druck von vorzugsweise 0,1 Hz bis 100 Hz, insbesondere 1 Hz bis 10 Hz, vorgesehen ist. Es hat sich gezeigt, dass durch ein pulsierendes Aufbringen von Druckluft Verunreinigungen im Gegenstand besonders gut gereinigt werden können, beispielsweise Asche und dergleichen.

Weiter hat es sich als vorteilhaft erwiesen, dass die Einrichtung mehrere, insbesondere zwei bis fünf, Düsen aufweist. Dadurch ist je nach Ausrichtung der Düsen entweder eine großflächigere gleichzeitige Reinigung oder bei Ausrichtung der Düsen auf dieselbe Position des Gegenstandes eine Reinigung mit Druckluft mit entsprechend erhöhter Frequenz möglich. In der Regel werden die Düsen abwechselnd angesteuert, sodass zur Bereitstellung der Druckluft ein Kompressor oder ein sonstiger Gaserzeuger mit geringer Leistungsaufnahme ausreichend ist.

Um ein effizientes und gleichzeitig effektives automatisiertes Abreinigen von Verunreinigungen zu gewährleisten, hat es sich als günstig erwiesen, wenn die Vorrichtung zur Bestimmung einer Pulsfrequenz eingerichtet ist, bei welcher Pulsfrequenz sich eine an einem Ende des Gegenstandes reflektierte Druckwelle mit einer vorlaufenden Druckwelle an einer vordefinierten Position im Gegenstand überlagert, um an der vordefinierten Position eine verbesserte Reinigungswirkung zu erzielen. Hierzu ist die Vorrichtung in der Regel mit einer Einrichtung zur Erfassung einer Geometrie des Gegenstandes sowie einer Datenverarbeitungseinrichtung eingerichtet, wobei mit der Datenverarbeitungseinrichtung unter Anwendung strömungsmechanischer bzw. gasdynamischer Methoden basierend auf der Geometrie des Gegenstandes eine erforderliche Charakteristik von aufgebrachten Druckpulsen, also insbesondere Frequenz, Druck, Geschwindigkeit und Abfolge der Druckpulse, errechenbar ist, um im Gegenstand eine entsprechende Überlagerung zu erreichen.

Zur gezielten Abreinigung von Verunreinigungen im Gegenstand ist es ferner vorteilhaft, wenn die Vorrichtung zur Bestimmung lokaler Verunreinigungen im Gegenstand eingerichtet ist, beispielsweise über ein optisches Messverfahren oder durch Analyse des Gegenstandes mittels einer Strahlung, beispielsweise Röntgenstrahlung.

Eine effektive Reinigung bzw. Abreinigung von Verunreinigungen im Gegenstand kann mit Druckluft besonders vorteilhaft erreicht werden, wenn die mechanische Reinigungseinrichtung zur Aufbringung von Druckluft bei 1,5-Facher bis 2,5-Facher Schallgeschwindigkeit eingerichtet ist. In der Regel wird Druckluft mit etwa dem 1,9-Fachen der Schallgeschwindigkeit aufgebracht. Dadurch können auch Effekte von vor- und an einem Ende des Gegenstandes reflektierten rücklaufenden Wellen besonders gut zur Reinigung ausgenutzt werden.

Weitere Merkmale, Vorteile und Wirkungen der Erfindung ergeben sich anhand des nachfolgend dargestellten Ausführungsbeispiels. In den Zeichnungen, auf welche dabei Bezug genommen wird, zeigen:
- Fig. 1: eine erfindungsgemäße Vorrichtung in einer Seitenansicht;
- Fig. 2: ein Detail einer erfindungsgemäßen Vorrichtung;
- Fig. 3 bis 5: Werkstückträger einer erfindungsgemäßen Vorrichtung;
- Fig. 6: ein weiteres Detail einer erfindungsgemäßen Vorrichtung.

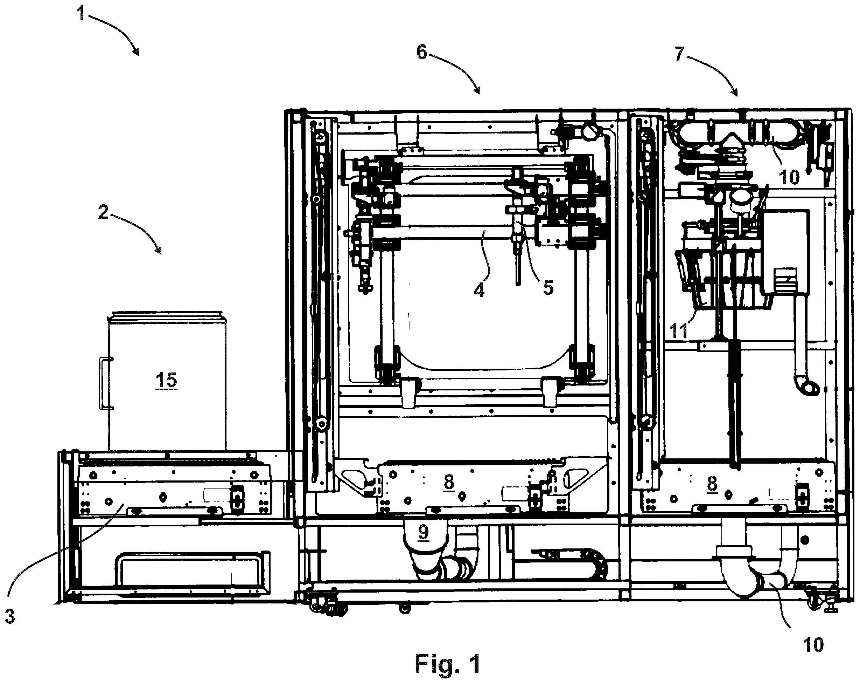

Fig. 1 zeigt eine erfindungsgemäße Vorrichtung 1 zur Reinigung und Qualitätsverbesserung eines aus einem Abgastrakt eines Kraftfahrzeuges ausgebauten Gegenstandes wie eines Filters 15 oder Katalysators in einer Seitenansicht, wobei eine seitliche Abdeckung nicht dargestellt ist. Nachfolgend werden die erfindungsgemäße Vorrichtung 1 sowie das erfindungsgemäße Verfahren unter Bezugnahme auf einen Filter 15 erläutert, wiewohl auch eine Umsetzung mit anderen gasdurchlässigen Gegenständen möglich ist.

Die Vorrichtung 1 weist einen Übergabebereich 2, eine Kaltzelle 6 und eine hermetisch abgeschlossene Heißreinigungszelle 7 auf. Zur Durchführung des erfindungsgemäßen Verfahrens wird ein zu reinigender Filter 15 im Übergabebereich 2 auf einem Werkstückträger 3 positioniert. Anschließend wird der Filter 15 zur Zustandsmessung und Reinigung vollautomatisch in die Kaltzelle 6 sowie anschließend in die Heißgaszelle und schließlich wieder zur Übergabeposition transportiert. Bei einer Einfahrt des Filters 15 in die Kaltzelle 6 wird eine Filtergeometrie mittels eines fix positionierten Laser-Scanners gescannt, sodass Einrichtungen in der Kaltzelle 6 sowie der Heißgaszelle an eine Filtergeometrie und gegebenenfalls vorhandene Störkonturen angepasst werden können. Für einen Transport des Werkstückträgers 3 samt einem Filter 15 kann ein Kettenantrieb oder auch eine Schwerlastführung nach einem Schubladenprinzip vorgesehen sein. Üblicherweise werden die Werkstückträger 3 über formschlüssige Verbindungen mit einer Fördertechnik 8 verbunden und durch die Vorrichtung 1 gefördert, wobei auch Positionierhilfen für eine zentrische und lageorientierte Position der Filter 15 und Katalysatoren vorgesehen sein können. Für eine automatische Abarbeitung von mehreren Bauteilen kann auch bei der Werkstückzufuhr ein Werkstückpuffer vorgesehen sein, von welchem aus automatisch ein Teil nach dem anderen zugeführt werden kann. Nach einer Reinigung können die gereinigten Teile in einen Fertigteilpuffer einlagert werden.

In der Kaltzelle 6 ist eine Einrichtung zur Erfassung eines Zustandes des Filters 15 bzw. eine Diagnoseeinrichtung vorgesehen, beispielsweise eine Einrichtung zur Differenzdruckprüfung des Filters 15 oder eine Kamera zur optischen Analyse, ein Laser-Scanner oder dergleichen. Natürlich können Einrichtungen zur Zustandsmessung grundsätzlich sowohl in der Kaltzelle 6 wie in der Heißreinigungszelle 7 vorgesehen sein. Basierend auf einem mit der Diagnoseeinrichtung gemessenen Zustand des Filters 15 wird anschließend automatisiert über eine durchzuführende Reinigung bzw. Parameter einer Kaltreinigung oder Heißreinigung entschieden. Dabei kann für eine automatisierte Entscheidung mittels einer Entscheidungslogik in einer Datenverarbeitungsanlage auch auf Erfahrungswerte aus bereits durchgeführten Reinigungen zurückgegriffen werden. Die Vorrichtung 1 kann derart auch als selbstlernende Vorrichtung 1 ausgebildet sein, sodass eine Effizienz des Verfahrens mit zunehmender Anzahl der durchgeführten Reinigungen stetig verbessert wird. Es wird dabei abhängig von einer gemessenen Qualität bzw. einem Zustand des Filters 15 automatisiert über eine erforderliche Reinigung entschieden bzw. eine Reinigungsstrategie unabhängig von einem Bediener festgelegt und umgesetzt.

Ferner ist in der Kaltzelle 6 eine als mechanische Reinigungseinrichtung 5 ausgebildete Einrichtung zur Verbesserung einer Qualität des Gegenstandes vorgesehen, um eine Druckluftreinigung des Filters 15 zu ermöglichen. Diese Einrichtung kann eine oder mehrere Düsen 19 aufweisen, mit welchen Druckluft mit einer Luftaustrittsgeschwindigkeit von beispielsweise Mach 1,91 und einem schmalen Strahlwinkel auf den Filter 15 aufgebracht wird.

Üblicherweise sind bei der mechanischen Reinigungseinrichtung 5 zwei bis fünf Düsen 19 vorgesehen, welche gleichzeitig angeströmt oder zeitlich versetzt angepulst werden, beispielsweise über ein Kolben-Pendelventil angesteuert. Dadurch ist die Aufbringung von Druckwellen auf den Filter 15 möglich, welche an einem unteren Ende des Filters 15 bzw. einem offenen Ende reflektiert werden. Es kommt somit durch eine Überlagerung von vor- und rücklaufenden Wellen im Filter 15 zu einer Druckerhöhung an vorberechenbaren Positionen, sodass an definierten Positionen gezielt eine Abreinigung erfolgen kann. Darüber hinaus hat sich gezeigt, dass eine Überlagerung von vor- und rücklaufenden Wellen im Filter 15 auch eine Druckerhöhung bzw. Druckpulsationen senkrecht zu einer Strahlrichtung, also im Ausführungsbeispiel etwa in horizontaler Richtung, bewirkt. Dadurch ergibt sich auch in benachbarten Zellen eines Partikelfilters mit Wabenstruktur eine Reinigungswirkung, selbst wenn diese benachbarten Zellen nicht direkt mit Druckluft beaufschlagt werden.

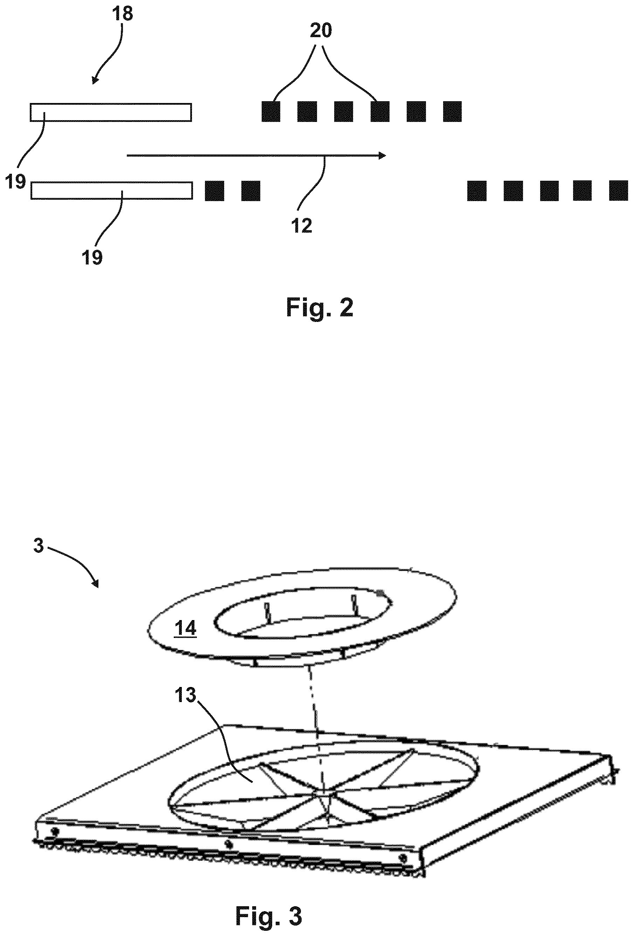

Eine mögliche Ausführung einer derartigen mechanischen Reinigungseinrichtung 5 ist in Fig. 2 dargestellt, wobei auch Bereiche unterschiedlicher Drücke wie bei einem Schlierenbild sichtbar gemacht sind. Die mechanische Reinigungseinrichtung 5 ist dabei als Duplexdüse 18 mit zwei Düsen 19 ausgebildet. Die Düsen 19 sind zur Aufbringung von Überschall-Druckpulsen 20 mit einer Frequenz von 1 Hz bis 10 Hz eingerichtet und üblicherweise derart angesteuert, dass mit einer Düse 19 Druckluft gepulst aufgebracht wird, während die andere Düse 19 geschlossen ist. Ein Öffnen und Schließen der Düsen 19 ist dabei sehr schnell bzw. mit steilen Flanken möglich, sodass zeitliche Druckverläufe eine Rechteckform aufweisen und ein großer Gradient der Strömungsgeschwindigkeit sowie ein starker Impuls erzeugt werden können. Dadurch ergeben sich mit Überschallgeschwindigkeit entlang einer Strömungsrichtung 12 fortlaufende Druckpulse 20 mit sehr geringem Strahlwinkel wie dargestellt. Die von den jeweiligen Düsen 19 ausgestoßenen Druckpulse 20 bewegen sich dabei entlang von Stromlinien der Düsen 19, welche beginnend bei der jeweiligen Düse 19 in Strömungsrichtung 12 verlaufen und somit ebenfalls etwa parallel sind und üblicherweise einen Abstand von nur wenigen Zentimetern, insbesondere wenigen Millimetern aufweisen.

Bei der in Fig. 2 dargestellten mechanischen Reinigungseinrichtung 5 werden jeweils sechs Druckpulse 20 mit einer Düse 19 aufgebracht bzw. ausgestoßen, wonach diese Düse 19 geschlossen wird und mit der jeweils anderen Düse 19 sechs Pulse aufgebracht werden. In einem Bereich der Druckpulse 20 bzw. der fortlaufenden Luft ist ein statischer Druck auf der jeweiligen Stromlinie wesentlich geringer als in einem Bereich, in welchem sich kein Druckpuls 20 fortbewegt bzw. die Luft steht. Dadurch bewirkt die pulsierende Ansteuerung der Düsen 19 nicht nur eine pulsierende Aufbringung von Luft in Strömungsrichtung 12, sondern auch sich entsprechend ausbreitende Druckschwankungen in Strömungsrichtung 12. Da die Düsen 19 abwechselnd angesteuert werden und ein Abstand zwischen den etwa parallel ausgerichteten Düsen 19 sehr gering ist, führt dies zu einem starken Druckgradienten senkrecht zur Strömungsrichtung 12 zwischen einem Druckpuls 20 und einem Bereich, in welchem sich kein Druckpuls 20 befindet bzw. zwischen den Stromlinien der beiden Düsen 19, sodass sich ein pulsierender Strömungsgradient quer zur Strömungsrichtung 12 ergibt. Dieser pulsierende Strömungsgradient quer zur Strömungsrichtung 12 bewirkt ein räumliches Pulsationsfeld bzw. sich räumlich ausbreitende Druckschwankungen, welche gemeinsam mit Interferenzeffekten eine erhöhte Reinigungswirkung ermöglichen.

Im Filter 15 bewirken die Druckunterschiede in Strömungsrichtung 12 sowie senkrecht zur Strömungsrichtung 12 eine verbesserte Abreinigung der Filterinnenwände von Ruß und Staub. Ein weiterer Vorteil dieses Reinigungsverfahren ist, dass durch die pulsierende Aufbringung von Druckluft weniger Druckluft zur Reinigung erforderlich ist als bei kontinuierlicher Aufbringung von Druckluft. Ferner ist eine Krafteinwirkung auf den Filter 15 geringer als bei kontinuierlicher Druckaufbringung, sodass Beschädigungen des Filters 15 vermieden werden.

Die Einrichtung zur Druckluftreinigung des Filters 15 ist in der Regel zur Aufbringung von Druckluft auf einen kleinen Teilbereich einer Stirnfläche des Filters 15 eingerichtet. Um dennoch den Filter 15 vollständig reinigen zu können, ist in der Regel auch ein kartesischer Roboter 4 zur variablen Positionierung der Einrichtung in sämtlichen Raumrichtungen relativ zum Filter 15 in der Kaltzelle 6 vorgesehen.

Üblicherweise wird auch eine Diagnoseeinrichtung zur Zustandsmessung des Filters 15 mit dem kartesischen Roboter 4 relativ zum Filter 15 positioniert, um eine Qualität einzelner Teilbereiche des Filters 15 zu beurteilen, beispielsweise optisch, mittels Druckdifferenzprüfung, mittels Messung eines Schwärzungsgrades oder durch Messung einer Partikelfangrate bzw. eines Partikelrückhaltevermögens. Ein Partikelrückhaltevermögen wird üblicherweise ermittelt, indem mittels eines Partikelgenerators ein Partikel enthaltendes Gas erzeugt wird, mit welchem der Filter beaufschlagt wird, wonach an einer stromabwärts gelegenen Position durch den Filter transportierte Partikel gemessen werden. Dabei kann die mechanische Reinigungseinrichtung 5 auch als kombinierte Reinigungs- und Diagnoseeinrichtung ausgebildet sein, beispielsweise mit einer Diagnose- und Reinigungsdüse bzw. einer Kombinationsdüse zur Aufbringung von Druckluft zur Reinigung sowie zur Differenzdruckprüfung und/oder zur Aufbringung eines reaktiven Gases, um eine katalytische Reaktivität zu beurteilen. Ferner kann in oder an der Kombinationsdüse eine Kamera zur optischen Beurteilung des Filters 15 vorgesehen sein. Darüber hinaus kann mittels der Kombinationsdüse auch ein heißes Gas zur Regeneration und zur Reinigung aufgebracht werden.

In der Regel wird ein Zustand des Filters 15, insbesondere eine Druckdifferenz, an etwa 50 Positionen an einem Partikelfilter gemessen, sodass stark verunreinigte Bereiche bzw. Bereiche mit unzureichender Qualität identifiziert und anschließend gezielt gereinigt werden können, um eine Qualität dieser Bereiche zu verbessern.

Darüber hinaus kann eine Einrichtung zum Bewegen des Werkstückträgers 3 in der Kaltzelle 6 vorgesehen sein, um eine gewünschte Relativposition von Diagnoseeinrichtung bzw. Reinigungsdüse zum Filter 15 zu erreichen. Beispielsweise kann eine Diagnose- oder Reinigungsdüse translatorischer in drei Raumrichtungen und der Werkstückträger 3 rotatorisch in einer oder mehreren Raumrichtungen bewegbar sein, um bei konstruktiv einfachem Aufbau eine gute relative Positionierbarkeit von Filter 15 und Kombinationsdüse und somit eine gute Reinigungswirkung zu erzielen.

Ferner kann auch eine Messung einer katalytischen Reaktivität bereichsweise erfolgen, beispielsweise indem eine NO/NO2-Konvertierung durch Beaufschlagung des Filters 15 mit Stickstoffmonoxid und anschließende Messung von Stickstoffdioxid an einer stromabwärts gelegenen Position unterhalb des Filters 15 erfasst wird. Darüber hinaus kann natürlich auch eine Messung einer CO/CO2-Konvertierung, einer Konvertierung von HC-Gas in CO und CO2 und H2O und dergleichen zur Qualitätsmessung vorgesehen sein. Weiter kann auch eine Bildung von Ammoniakgas bei SCR-Katalysatoren und eine Umwandlung von Ammoniak und Stickoxiden in Stickstoff und CO2 und dergleichen erfasst werden, vorzugsweise ebenfalls bereichsweise.

An einer Position unterhalb einer Fördertechnik 8 für den Werkstückträger 3 ist in der Kaltzelle 6 eine Absaugleitung 9 angeordnet, um abgereinigten Ruß aus dem Filter 15 aufzufangen, abzutransportieren und einer Entsorgung zuzuführen. Hierzu kann beispielsweise ein Staubabscheider, insbesondere ein Zyklonabscheider, vorgesehen sein.

Basierend auf einer gemessenen Qualität des Filters 15 werden anschließend automatisiert Parameter einer erforderlichen Reinigung gewählt, beispielsweise eine Dauer einer mechanischen Reinigung oder eine Temperatur einer thermischen Reinigung in der Heißgaszelle, wonach in der Kaltzelle 6 eine gegebenenfalls erforderliche mechanische Reinigung durchgeführt wird. Basierend auf gemessenen Daten kann auch ein Vergleich mit einem Referenzbauteil durchgeführt und der Filter basierend auf dem Vergleich als gut oder schlecht beurteilt werden.

An die Kaltzelle 6 angrenzend ist die Heißreinigungszelle 7 zur Verbesserung einer Qualität des Filters über eine thermische Reinigung in der Vorrichtung 1 vorgesehen, welche von der Kaltzelle 6 durch eine automatische und dichtende Türe getrennt ist. Dadurch ist eine hermetische Trennung eines Inneren der Heißreinigungszelle 7 von der Kaltzelle 6 sowie einer Umgebung erreicht, sodass ein Austreten von heißer Luft während einer Heißreinigung verhindert wird und bei Bedarf ein Einströmen von Sauerstoff bei einer ungewollten thermischen Reaktion unterbunden werden kann. Ferner ist in der Heißreinigungszelle 7 kopfseitig ein variabler Diffusor 11 mit variabler Geometrie in radialer sowie axialer Richtung vorgesehen. Dadurch kann der variable Diffusor 11 einfach und automatisiert an Filter 15 unterschiedlicher Durchmesser angepasst werden. Beispielsweise ist die dargestellte Vorrichtung 1 für Filter 15 mit Substratgrößen von 4 ¾ Zoll bis 15 Zoll geeignet. Der variable Diffusor 11, welcher sowohl an runde als auch eckige Stirnseiten von Filtern anpassbar ist, ist mit einer Heißgaszuleitung 10 verbunden, sodass durch den variablen Diffusor 11 ein heißes Gas wie Luft zur Reinigung auf den Filter 15 aufgebracht werden kann. Ferner mündet die Heißgaszuleitung 10 auch in einen Bereich unterhalb einer Fördertechnik 8 für den Werkstückträger 3, sodass in der Heißreinigungszelle 7 ein Beaufschlagen des Filters 15 sowohl von oben durch den variablen Diffusor 11 mit variabler Geometrie als auch von unten durch einen gasdurchlässigen Werkstückträger 3 mit Diffusoreinsatz 14 möglich ist. Ein heißes Gas kann zentral mit einem Heizer erzeugt werden. Alternativ kann bodenseitig und kopfseitig in der Heißgaszelle jeweils ein Heizer, beispielsweise ein elektrisch betriebener Heizer, vorgesehen sein.

Eine Abluft aus der Heißgaszelle wird über einen nicht dargestellten Wärmetauscher geleitet, um aus dem heißen Gas nach der Reinigung eine Energie wiederzugewinnen, beispielsweise um ein heißes Gas vor der Reinigung vorzuwärmen. Eine Restwärme bzw. eine vorhandene Exergie kann mit der Abluft aus der Kaltzelle und mit einer Spühlluft aus der Anlage ausgetragen werden.

Fig. 3 zeigt einen Werkstückträger 3 samt einem Diffusoreinsatz 14 in Explosionsdarstellung. Wie ersichtlich weist der Werkstückträger 3 eine zentrale Öffnung 13 auf, in welcher ein Diffusoreinsatz 14 angeordnet ist. Dies ermöglicht ein vollflächiges und gleichmäßiges Aufbringen von Gas auch auf eine untere Stirnseite des Filters 15, welche mit dem Werkstückträger 3 verbunden ist.

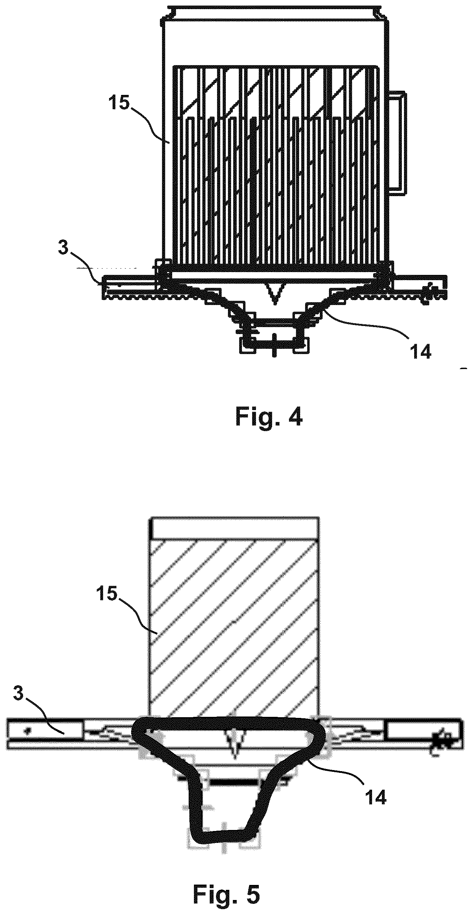

Fig. 4 und 5 zeigen Schnitte durch Werkstückträger 3 erfindungsgemäßer Vorrichtungen 1, in welchen unterschiedliche Diffusoreinsätze 14 angeordnet sind samt Filter 15 unterschiedlicher Größe. Wie ersichtlich kann aufgrund der lösbaren Verbindung von Diffusoreinsätzen 14 unterschiedlicher Größe mit Werkstückträgern 3 derselbe Werkstückträger 3 mittels Austausch entsprechender Diffusoreinsätze 14 auf einfache Weise für verschiedenste Filtergeometrien bzw. -durchmesser adaptiert werden. Dadurch wird gewährleistet, dass auch bei Filtern 15 unterschiedlicher Größe bei einer Heißgasreinigung ein gesamter Volumenstrom eines heißen Gases in den Filter 15 geleitet wird, sodass eine hohe Energieeffizienz erreicht wird, welche insbesondere für einen Einsatz der Vorrichtung 1 in kleinen Kfz-Werkstätten vorteilhaft ist.

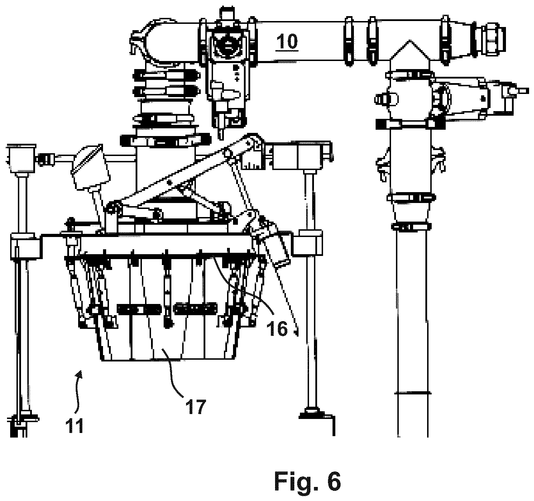

Fig. 6 zeigt den variablen Diffusor 11 der Heißgaszelle der erfindungsgemäßen Vorrichtung 1 im Detail. Die variable Geometrie des variablen Diffusors 11 wird dabei durch ineinander verschiebbare flächige bzw. plattenförmige Elemente 17, hier dünne, etwa kegelförmige und/oder flexible Bleche, erreicht, welche an einem oberen Ende entlang einer kreisförmigen Kontur 16 um eine Achse tangential zur kreisförmigen Kontur 16 bewegbar bzw. schwenkbar angeordnet sind. Ein Mittelpunkt eines Kreises der Kontur 16 liegt bei einer Reinigung etwa auf einer gedachten Längsachse eines in der Heißgaszelle befindlichen Filters 15. Eine Ebene des Kreises liegt etwa senkrecht zur gedachten Längsachse sowie senkrecht zu einer Bildebene von Fig. 6.

Durch die entsprechend bewegbare Anordnung von plattenförmigen, vorzugsweise hitzebeständigen, Elementen 17 ist ein Ineinanderschieben der Bleche und somit eine Variation eines effektiven Durchmessers an einem unteren Ende des variablen Diffusors 11 möglich, ähnlich einer Nachbrennerdüse bei einem Überschall-Flugzeug. Eine Heißgaszuleitung 10 ist mit dem variablen Diffusor 11 verbunden, sodass ein in der Heißgaszelle auf einem Werkstückträger 3 positionierter Filter 15 sowohl von oben als auch von unten mit einem heißen Gas bei einer Temperatur von üblicherweise 200 °C bis 900 °C reinigbar. Dadurch ergibt sich eine besonders effiziente Reinigung, weil durch die beidseitige Aufbringung eines heißen Gases eine zur Reinigung erforderlichen Energie reduziert werden kann. Um die Anlage bei geringer Anschlussleistung betreiben zu können, erfolgt eine Reinigung von oben normalerweise abwechselnd mit einer Reinigung von unten, wenngleich grundsätzlich auch eine gleichzeitige Reinigung von oben und unten möglich ist.

Üblicherweise wird ein Zustand des Filters 15 nach einer Reinigung mittels Druckluft und Reinigung mittels eines heißen Gases erneut automatisiert gemessen, um einen Reinigungszustand festzustellen. Es kann dann in eine Datenverarbeitungseinrichtung automatisiert entschieden werden, ob eine erneute und gegebenenfalls welche Reinigung erforderlich ist, oder ob eine Reinigung abgeschlossen ist. Ist die Reinigung abgeschlossen, wird der Filter 15 durch die Fördertechnik 8 mit dem Werkstückträger 3 zur Übergabeposition transportiert, an welcher der Filter 15 entnommen werden kann. Abschließend kann auch zur Dokumentation einer durchgeführten Reinigung ein Papierausdruck über eine durchgeführte Reinigung und einen erzielten Reinigungszustand erstellt werden. Dabei kann auch eine noch zu erwartende Standzeit basierend auf dem erreichten Reinigungszustand errechnet und ausgegeben werden.

Sämtliche Verfahrensschritte zwischen der Aufgabe des Filters 15 an der Übergabeposition und der Entnahme des Filters 15 erfolgen automatisiert, sodass kein manueller Eingriff erforderlich ist. Wenngleich im Ausführungsbeispiel nur ein Filter 15 in der Vorrichtung 1 dargestellt ist, ist auch eine Ausführung der Vorrichtung 1 mit einem integrierten Pufferspeicher für weitere Filter 15 möglich, sodass mehrere Filter 15 gleichzeitig aufgegeben und in der Vorrichtung 1 vermessen und gereinigt bzw. wiederaufbereitet werden können.

Mit einer erfindungsgemäßen Vorrichtung 1 sowie einem entsprechenden Verfahren ist ein vollautomatisiertes Reinigen eines verschmutzten Gegenstandes wie eines Filters 15 oder Katalysators auf besonders energieeffiziente Weise möglich. Die entsprechende Vorrichtung 1 ist mit geringer elektrischer Leistung betreibbar und gleichzeitig sehr kompakt und kostengünstig herstellbar. Beispielsweise kann durch eine sequenzielle Messung und Reinigung einerseits in der Kaltzelle 6 und anschließend andererseits in der Heißgaszelle eine Anschlussleistung der Vorrichtung 1 von nur 13 kW erreicht werden, obwohl eine Summe von Nennleistungen von Energieverbrauchern in der Vorrichtung 1 20 kW und mehr betragen kann. Ferner ist die Vorrichtung 1 des Ausführungsbeispiels zur ausschließlich trockenen Reinigung des Filters 15 eingerichtet, sodass keine Flüssigkeiten bevorratet, gereinigt und entsorgt werden müssen. Dadurch kann die Vorrichtung 1 mit geringem Bauraum und sehr kompakt ausgebildet sein, sodass die Vorrichtung durch übliche Werkstatt-Türen mit einer Breite von 0,8 m und eine Höhe von 1,8 m transportierbar ist, sowie mit geringem Aufwand betrieben werden. Üblicherweise werden sämtliche für das Verfahren erforderlichen Betriebsstoffe, Temperaturen, Drücke, Bewegungen und dergleichen durch die Vorrichtung bereitgestellt, sodass lediglich ein Strom-Anschluss für einen Betrieb der Vorrichtung erforderlich ist.

Die Vorrichtung 1 ist daher für einen dezentralen Einsatz beispielsweise in Kfz-Werkstätten geeignet. Ein für die Bereitstellung von Druckluft in der Vorrichtung 1 erforderlicher Kompressor kann dabei auch zur Bereitstellung von Druckluft in der Kfz-Werkstätte genutzt werden. Darüber hinaus kann auch eine Abwärme aus der Heizgaszelle wieder verwertet werden, um einen Energiebedarf weiter zu reduzieren.

## Patentansprüche

1. Verfahren zur Qualitätsverbesserung eines aus einem Abgastrakt einer Verbrennungskraftmaschine ausgebauten gasdurchlässigen Gegenstandes wie eines Filters (15) oder Katalysators, wobei in einem automatisierten Verfahren ein Zustand des Gegenstandes gemessen wird, wonach eine Qualitätsverbesserung durchgeführt wird, wonach ein Zustand des Gegenstandes erneut gemessen wird, **dadurch gekennzeichnet, dass** eine Reinigung mit einem unter einem Druck stehenden Gas erfolgt, welches mit einer Geschwindigkeit von 1,0-Facher bis 3-Facher Schallgeschwindigkeit aufgebracht wird, welches durch eine Düse (19) aufgebracht wird, wobei ein Strahlwinkel 1° bis 45° beträgt.

2. Verfahren nach Anspruch 1, **dadurch gekennzeichnet, dass** der Gegenstand beim Verfahren mit einem Werkstückträger (3) transportiert wird, welcher gasdurchlässig ist und insbesondere einen Diffusor aufweist.

3. Verfahren nach Anspruch 1 oder 2, **dadurch gekennzeichnet, dass** der Gegenstand mit einem heißen Gas gereinigt wird, welches durch einen axial und/oder radial verstellbaren variablen Diffusor (11) aufgebracht wird, welcher vor Aufbringung des heißen Gases an eine Geometrie des Gegenstandes angepasst wird.

4. Verfahren nach einem der Ansprüche 1 bis 3, **dadurch gekennzeichnet, dass** ein heißes Gas aus unterschiedlichen Richtungen auf zwei gegenüberliegende Stirnflächen des Gegenstandes aufgebracht wird.

5. Verfahren nach einem der Ansprüche 1 bis 4, **dadurch gekennzeichnet, dass** eine Reinigung mit Luft erfolgt.

6. Verfahren nach Anspruch 5, **dadurch gekennzeichnet, dass** das Gas durch eine Düse (19) aufgebracht wird, wobei ein Strahlwinkel 10° bis 15° beträgt.

7. Verfahren nach einem der Ansprüche 1 bis 6, **dadurch gekennzeichnet, dass** zur Reinigung ein Gas durch mehrere, insbesondere zwei bis fünf, Düsen (19) abwechselnd auf eine Stirnseite des Gegenstandes aufgebracht wird.

8. Verfahren nach einem der Ansprüche 5 bis 7, **dadurch gekennzeichnet, dass** das Gas mit zeitlich variablem Druck bzw. gepulst aufgebracht wird, vorzugsweise mit einer Frequenz von 0,1 Hz bis 100 Hz, insbesondere 1 Hz bis 10 Hz, wobei bevorzugt mehrere, insbesondere zwei bis fünf, Düsen (19) eingesetzt werden und Druckpulse (20) durch die einzelnen Düsen (19) zeitlich versetzt aufgebracht werden.

9. Verfahren nach Anspruch 8, **dadurch gekennzeichnet, dass** eine Pulsfrequenz abhängig von einer Geometrie des Gegenstandes derart gewählt wird, dass das mit wechselndem Druck aufgebrachte Gas im Gegenstand eine Druckwelle bildet, welche an einem Ende des Gegenstandes reflektiert wird, wobei vorzugsweise die Pulsfrequenz derart gewählt wird, dass sich die reflektierte Druckwelle im Gegenstand mit einer vorlaufenden Druckwelle an einer vordefinierten Position überlagert, um an der vordefinierten Position eine verbesserte Reinigungswirkung zu erreichen.

10. Vorrichtung (1) zur Diagnose und Qualitätsverbesserung eines aus einem Abgastrakt einer Verbrennungskraftmaschine ausgebauten gasdurchlässigen Gegenstandes wie eines Filters (15) oder eines Katalysators, insbesondere zur Durchführung eines Verfahrens nach einem der Ansprüche 1 bis 9, wobei eine Einrichtung zur Verbesserung einer Qualität des Gegenstandes und eine Diagnoseeinrichtung zur Messung eines Zustandes des Gegenstandes sowie eine mit der Diagnoseeinrichtung verbundene Datenverarbeitungseinrichtung vorgesehen sind, wobei die Einrichtung zur Verbesserung einer Qualität des Gegenstandes mit der Datenverarbeitungseinrichtung steuerbar ist, sodass in einem vollautomatisierten Verfahren ein Zustand des Gegenstandes bestimmbar und eine Qualitätsverbesserung durchführbar ist, **dadurch gekennzeichnet, dass** die Vorrichtung zur Reinigung des Gegenstandes mit einem unter einem Druck stehenden Gas eingerichtet ist, wobei das Gas mit einer Geschwindigkeit von 1,0-Facher bis 3-Facher Schallgeschwindigkeit durch eine Düse (19) aufbringbar ist, wobei ein Strahlwinkel 1° bis 45° beträgt.

11. Vorrichtung (1) nach Anspruch 10, **dadurch gekennzeichnet, dass** die Vorrichtung (1) ein Transportsystem für einen Transport der zu reinigende Gegenstände mit Werkstückträgern (3) aufweist, wobei die Werkstückträger (3) gasdurchlässig sind, wobei bevorzugt der Werkstückträger (3) einen Diffusoreinsatz (14) aufweist, um einen auf dem Werkstückträger (3) positionierten Gegenstand von unten über die Zuleitung vollflächig mit einem Gas zu beaufschlagen, wobei der Diffusoreinsatz (14) vorzugsweise lösbar mit dem Werkstückträger (3) verbunden ist.

12. Vorrichtung (1) nach Anspruch 10 oder 11, **dadurch gekennzeichnet, dass** die Vorrichtung (1) eine Heißreinigungszelle (7) für eine thermische Reinigung des Gegenstandes aufweist, wobei in der Heißreinigungszelle (7) ein radial und/oder axial verstellbarer variabler Diffusor (11) positioniert ist, um ein vollflächiges und gleichmäßiges Aufbringen eines heißen Gases auf Gegenstände unterschiedlicher Durchmesser zu ermöglichen.

13. Vorrichtung (1) nach einem der Ansprüche 10 bis 12, **dadurch gekennzeichnet, dass** die Vorrichtung (1) eine Kaltzelle (6) aufweist und in der Kaltzelle (6) eine mechanische Reinigungseinrichtung (5) zur Reinigung des Gegenstandes mit einem Gas unter einem pulsierend wechselnden Druck von vorzugsweise 0,1 Hz bis 100 Hz, insbesondere 1 Hz bis 10 Hz, vorgesehen ist, wobei die Einrichtung mehrere, insbesondere zwei bis fünf, Düsen (19) aufweist.

14. Vorrichtung (1) nach Anspruch 13, **dadurch gekennzeichnet, dass** die Vorrichtung (1) zur Bestimmung einer Pulsfrequenz eingerichtet ist, bei welcher Pulsfrequenz sich eine an einem Ende des Gegenstandes reflektierte Druckwelle mit einer vorlaufenden Druckwelle an einer vordefinierten Position im Gegenstand überlagert, um an der vordefinierten Position eine verbesserte Reinigungswirkung zu erzielen.

## Claims

1. Method for the quality improvement of a gas-permeable object, like a filter (15) or catalytic converter, removed from an exhaust gas tract of an internal combustion engine, wherein in an automated process a condition of the object is measured, after which a quality improvement is carried out, after which a condition of the object is measured again, **characterized in that** a cleaning is carried out with a gas under pressure which is applied with a speed from 1.0 times to 3 times the speed of sound, which is applied through a nozzle (19), wherein a jet angle is 1° to 45°.

2. Method according to Claim 1, **characterized in that** during the process the object is transported with a workpiece carrier (3) which is gas-permeable and in particular has a diffuser.

3. Method according to Claim 1 or 2, **characterized in that** the object is cleaned with a hot gas which is applied through an axially and/or radially adjustable diffuser (11), which is adapted to a geometry of the object before application of the hot gas.

4. Method according to one of Claims 1 to 3, **characterized in that** a hot gas is applied from different directions to two opposite front surfaces of the object.

5. Method according to one of Claims 1 to 4, **characterized in that** a cleaning is carried out with air.

6. Method according to Claim 5, **characterized in that** the gas is applied through a nozzle (19) wherein a wherein a jet angle is 10° to 15°.

7. Method according to one of Claims 1 to 6, **characterized in that** for the cleaning a gas is applied alternatingly through multiple, in particular two to five nozzles (19) to a front surface of the object.

8. Method according to one of Claims 5 to 7, **characterized in that** the gas is applied with time-dependent variable pressure and/or in pulsed manner, preferably with a frequency from 0.1 Hz to 100 Hz, particularly 1 Hz to 10 Hz, wherein preferably multiple, in particular two to five nozzles (19) are used and pressure pulses (20) are applied through the individual nozzles (19) offset as to time.

9. Method according to Claim 8, **characterized in that** a pulse frequency is selected depending on a geometry of the object in such manner that the gas applied with variable pressure forms a pressure wave in the object, which is reflected at one end of the object, wherein the pulse frequency is preferably chosen such that the reflected pressure wave in the object is overlaid with a forward-moving pressure wave at a predefined position in order to achieve an improved cleaning effect at the predefined position.

10. Device (1) for the diagnosis and quality improvement of a gas-permeable object, like a filter (15) or catalytic converter, removed from an exhaust gas tract of an internal combustion engine, in particular for performing a method according to one of Claims 1 to 9, wherein an apparatus for improvement of a quality of the object and a diagnostic apparatus for measuring a condition of the object and a data processing device connected to the diagnostic apparatus are provided, wherein the apparatus for improvement of a quality of the object is controllable with the data processing device, so that a condition of the object is determinable in a fully automated method and a quality improvement can be carried out, **characterized in that** the device for cleaning of the object is furnished with a gas that is under pressure, wherein the gas can be applied with a speed from 1.0 times to 3 times the speed of sound, which is applied through a nozzle (19), wherein a jet angle is 1° to 45°.

11. Device (1) according to Claim 10, **characterized in that** the device (1) includes a transport system for a transport with workpiece carriers (3) of the objects that are to be cleaned, wherein the workpiece carriers (3) are gas-permeable, wherein the workpiece carrier (3) preferably has a diffuser insert (14) in order to deliver a gas to the entire surface area of an object positioned on the workpiece carrier (3) from below via the feed line, wherein the diffuser insert (14) is preferably connected detachably to the workpiece carrier (3).

12. Device (1) according to Claim 10 or 11, **characterized in that** the device (1) includes a hot cleaning cell (7) for a thermal cleaning of the object, wherein a radially and/or axially adjustable variable diffuser (11) is positioned in the hot cleaning cell (7) to enable a full-surface and even application of a hot gas to objects of various diameters.

13. Device (1) according to one of Claims 10 to 12, **characterized in that** the device (1) has a cold cell (6) and in the cold cell (6) a mechanical cleaning apparatus (5) is provided for cleaning of the object with a gas under a pulsed changing pressure from preferably 0.1 Hz to 100 Hz, particularly 1 Hz to 10 Hz, wherein the apparatus includes multiple, in particular two to five, nozzles (19).

14. Device (1) according to Claim 13, **characterized in that** the device (1) is configured for determining a pulse frequency, at which pulse frequency a pressure wave reflected at one end of the object is overlaid with a forward-moving pressure wave at a predefined position in the object in order to achieve an improved cleaning effect at the predefined position.

## Revendications

1. Procédé, destiné à améliorer la qualité d'un objet perméable au gaz, tel qu'un filtre (15) ou un catalyseur, démonté d'une ligne des gaz d'échappement d'un moteur à combustion interne, au cours d'un procédé automatisé, un état de l'objet étant mesuré, suite à quoi, une amélioration de la qualité est réalisée, suite à quoi, un état de l'objet est mesuré une fois encore, **caractérisé en ce qu'**il s'effectue un nettoyage avec un gaz sous une pression, qui est appliqué à une vitesse de 1,0 fois à 3 fois la vitesse du son, qui est appliqué par une buse (19), un angle de jet étant de 1° à 45°.

2. Procédé selon la revendication 1, **caractérisé en ce que** lors du procédé, l'objet est transporté avec un porte-pièce (3) lequel est perméable au gaz et comporte notamment un diffuseur.

3. Procédé selon la revendication 1 ou 2, **caractérisé en ce que** l'objet est nettoyé avec un gaz chaud, lequel est appliqué par un diffuseur (11) variable, réglable dans la direction axiale et/ou radiale, qui avant l'application du gaz chaud est adapté à une géométrie de l'objet.

4. Procédé selon l'une quelconque des revendications 1 à 3, **caractérisé en ce qu'**un gaz chaud est appliqué à partir de différentes directions sur deux faces frontales opposées de l'objet

5. Procédé selon l'une quelconque des revendications 1 à 4, **caractérisé en ce qu'**un nettoyage à l'air est effectué.

6. Procédé selon la revendication 5, **caractérisé en ce que** le gaz est appliqué par une buse (19), un angle de jet étant de 10° à 15°.

7. Procédé selon l'une quelconque des revendications 1 à 6, **caractérisé en ce que** pour le nettoyage, un gaz est appliqué en alternance par plusieurs, notamment par de deux à cinq buses (19) sur une face frontale de l'objet.

8. Procédé selon l'une quelconque des revendications 5 à 7, **caractérisé en ce que** le gaz est appliqué avec une pression variable dans le temps ou par impulsions, de préférence avec une fréquence de 0,1 Hz à 100 Hz, notamment de 1 Hz à 10 Hz, de préférence, plusieurs, notamment de deux à cinq buses (19) étant utilisées et des impulsions de pression (20) étant appliquées avec un décalage dans le temps par les buses (19) individuelles.

9. Procédé selon la revendication 8, **caractérisé en ce qu'**une fréquence d'impulsion est sélectionnée en fonction d'une géométrie de l'objet, de telle sorte que le gaz appliqué avec une pression variable crée dans l'objet une onde de pression qui est réfléchie sur une extrémité de l'objet, de préférence la fréquence d'impulsion étant sélectionnée de telle sorte que l'onde de pression qui se réfléchit se superpose dans l'objet avec une onde de pression antérieure sur une position prédéfinie, pour l'obtention d'un effet de nettoyage amélioré sur la position prédéfinie.

10. Dispositif (1), destiné à diagnostiquer et à améliorer la qualité d'un objet perméable au gaz, tel qu'un filtre (15) ou un catalyseur, démonté d'une ligne des gaz d'échappement d'un moteur à combustion interne, notamment à réaliser un procédé selon l'une quelconque des revendications 1 à 9, un système destiné à améliorer une qualité l'objet et un système de diagnostic, destiné à mesurer un état de l'objet, ainsi qu'un système de traitement des données, connecté sur le système de diagnostic étant prévus, le système destiné à améliorer une qualité de l'objet étant susceptible d'être commandé à l'aide du système de traitement des données de telle sorte que lors d'un procédé entièrement automatique, un état de l'objet soit définissable et une amélioration de la qualité soit réalisable, **caractérisé en ce que** le dispositif destiné au nettoyage de l'objet est aménagé avec un gaz sous une pression, le gaz étant applicable à une vitesse de 1,0 fois à 3 fois la vitesse du son par une buse (19), un angle de jet étant de 1° à 45°.

11. Dispositif (1) selon la revendication 10, **caractérisé en ce que** le dispositif (1) comporte un système de transport pour un transport des objets qui doivent être nettoyés avec des porte-pièces (3), les porte-pièces (3) étant perméables au gaz, de préférence, le porte-pièce (3) comportant un insert diffuseur (14) pour soumettre un objet positionné sur le porte-pièce (3) par le bas, via un conduit d'alimentation, à pleine surface à un gaz, l'insert diffuseur (14) étant relié de préférence de manière amovible avec le porte-pièce (3).

12. Dispositif (1) selon la revendication 10 ou 11, **caractérisé en ce que** le dispositif (1) comporte une cellule de nettoyage à chaud (7) pour un nettoyage thermique de l'objet, dans la cellule de nettoyage à chaud (7) étant positionné un diffuseur (11) variable, réglable en direction radiale et/ou axiale, pour permettre une application à pleine surface et régulière d'un gaz chaud sur des objets de différents diamètres.

13. Dispositif (1) selon l'une quelconque des revendications 10 à 12, **caractérisé en ce que** le dispositif (1) comporte une cellule froide (6) et **en ce que** dans la cellule froide (6) est prévu un système de nettoyage (5) mécanique, destiné à nettoyer l'objet à l'aide d'un gaz sous une pression variable par impulsions, de préférence de 0,1 Hz à 100 Hz, notamment de 1 Hz à 10 Hz, le système comportant plusieurs, notamment de une à cinq buses (19)

14. Dispositif (1) selon la revendication 13, **caractérisé en ce que** le dispositif (1) est aménagé pour définir une fréquence d'impulsion à laquelle fréquence d'impulsion, une onde de pression qui se réfléchit sur une extrémité de l'objet se superpose à une onde de pression antérieure, sur une position prédéfinie dans l'objet, pour obtenir sur la position prédéfinie un effet de nettoyage amélioré.
